(19) Europäisches Patentamt / European Patent Office / Office européen des brevets

(11) **EP 4 071 908 A1**

(12) # DEMANDE DE BREVET EUROPEEN

(43) Date de publication:
**12.10.2022   Bulletin 2022/41**

(21) Numéro de dépôt: **22163573.3**

(22) Date de dépôt: **22.03.2022**

(51) Classification Internationale des Brevets (IPC):
***H01M 50/242*** *(2021.01)*

(52) Classification Coopérative des Brevets (CPC):
**H01M 50/242**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **26.03.2021   FR 2103072**

(71) Demandeur: **SAFT**
**92300 Lavallois-Perret (FR)**

(72) Inventeur: **VILLALOBOS, Mélanie**
**86240 SMARVES (FR)**

(74) Mandataire: **Hirsch & Associés**
**154 Boulevard Haussmann**
**75008 Paris (FR)**

(54) **MATERIAU DE CALAGE D'ELEMENTS ELECTROCHIMIQUES DANS UNE BATTERIE**

(57)      Une batterie comprenant :
a) au moins un élément électrochimique, ledit élément électrochimique comprenant un conteneur,
b) une structure de maintien dudit au moins un élément électrochimique dans la batterie,
c) un gel d'organopolysiloxane disposé entre la structure de maintien et une paroi du conteneur dudit au moins un élément électrochimique
le gel d'organopolysiloxane présentant une pénétrabilité allant de 20 à 500 unités, la pénétrabilité étant mesurée par un test au cône entier, tel que défini dans la norme NF ISO 2137 : 2020-11, pour un gel non travaillé.

[Fig. 1b]

EP 4 071 908 A1

**Description**

**Domaine technique de l'invention**

Le domaine technique auquel se rapporte l'invention est celui des matériaux permettant le calage d'un ou de plusieurs éléments électrochimiques, par exemple dans un coffre de batterie. Le domaine technique est également celui des matériaux permettant de protéger ces éléments contre les vibrations auxquelles ils sont exposés pendant par exemple le transport de la batterie, ou en raison de la proximité d'un dispositif générant des vibrations. Le domaine technique est également celui des matériaux capables de protéger les éléments contre les chocs.

**Contexte de l'invention**

Un élément électrochimique, encore appelé élément dans ce qui suit, est un dispositif de production d'électricité dans lequel de l'énergie chimique est convertie en énergie électrique. L'énergie chimique est constituée par des composés électrochimiquement actifs déposés sur au moins une face d'électrodes disposées dans l'élément. L'énergie électrique est produite par des réactions électrochimiques au cours d'une décharge de l'élément. Les électrodes, disposées dans un conteneur, sont connectées électriquement à des bornes de sortie de courant qui assurent une continuité électrique entre les électrodes et un consommateur électrique auquel l'élément est associé.

Plusieurs éléments peuvent être connectés ensemble en série ou en parallèle en fonction de la tension nominale de fonctionnement du consommateur électrique et de la quantité d'énergie qu'il est prévu de fournir à ce consommateur. Les éléments peuvent alors être placés dans un boîtier commun, encore appelé coffre de groupement. Ils peuvent aussi être solidarisés par des pièces, telles que des flasques. On désigne généralement l'ensemble du boîtier et de la pluralité d'éléments qu'il renferme ou l'ensemble du ou des flasques et de la pluralité d'éléments qu'ils solidarisent, par le terme de batterie. Dans un souci de commodité de branchement électrique entre des éléments placés dans une batterie, les bornes de sortie de courant positive et négative sont souvent fixées sur la paroi d'une même face du conteneur ou sur le couvercle de l'élément.

La batterie peut être intégrée à un véhicule terrestre, aérien ou souterrain (tête de forage), ou maritime ou être utilisée pour des applications spatiales. Elle peut être placée dans un environnement générant et répercutant des vibrations, par exemple un moteur électrique ou un équipement industriel. La batterie peut aussi être manipulée par un opérateur ou par des chariots de manutention. La batterie subit alors dans ces différentes situations des vibrations susceptibles de déplacer les éléments à l'intérieur du coffre et de les endommager. Ces déplacements entrainent de fortes contraintes pouvant provoquer des dégradations ou des ruptures des composants de la batterie, voire des éléments eux-mêmes. Le déplacement des éléments dans le coffre de la batterie est limité ou empêché grâce à l'utilisation de matériaux de calage. Les matériaux de calage maintiennent en place les éléments et réduisent l'intensité des vibrations transmises aux éléments. Le calage des éléments se fait actuellement par exemple à l'aide de matériaux plastiques.

Les matériaux de calage ont également d'autres rôles importants mais moins critiques, développés dans ce qui suit. Lorsque la batterie est installée dans un aéronef destiné à voler à haute altitude, donc dans un espace dépourvu d'air, l'évacuation de la chaleur émise par le fonctionnement des éléments se fait essentiellement par conduction et non par convection. La chaleur s'évacue principalement par conduction, soit à travers des barrettes métalliques servant à la connexion de puissance des éléments, soit à travers un flasque servant à maintenir les éléments à des emplacements prédéterminés dans le coffre de groupement de la batterie. Des ouvertures, par exemple circulaires, découpées dans le flasque s'encastrent dans une extrémité cylindrique des éléments. La chaleur s'évacue dans la direction longitudinale de l'élément mais aussi radialement depuis une extrémité de l'élément vers le flasque. Un matériau de calage est intercalé entre la surface externe cylindrique des éléments et le flasque. Il est important que le matériau de calage présente une bonne conductivité thermique afin de transmettre rapidement la chaleur de l'élément vers le flasque. Le flasque est de préférence en métal, par exemple en aluminium, pour permettre une bonne évacuation de la chaleur.

Le matériau de calage est aussi de préférence un bon isolant électrique afin de ne pas participer à la conduction électrique entre deux éléments et d'éviter les fuites de courant.

Le matériau de calage est de préférence suffisamment fluide pour combler tout l'espace entre le flasque et la surface extérieure de l'élément en évitant la présence de bulles d'air. Dans le cas d'applications spatiales, le matériau de calage doit être résistant aux rayonnements ionisants. Il ne doit pas se décomposer et émettre de produits secondaires.

Le document EP-A-2 403 050 décrit une batterie d'éléments électrochimiques comprenant un coffre dans lequel est disposée une pluralité d'éléments électrochimiques. Le maintien des éléments est assuré par l'emploi d'une mousse qui comble l'espace entre les éléments électrochimiques. Cette mousse présente la particularité d'être ignifugée, rigide, et d'avoir une porosité fermée. Des matériaux préférés pouvant être utilisés sont le polyuréthane et le mélange de polyuréthane et d'époxy.

Il est connu d'utiliser des résines polyuréthanes comme matériau de calage d'éléments dans un coffre de groupement d'une batterie. Ces résines sont obtenues par réticulation de prépolymères d'uréthane liquide. Elles présentent néanmoins les inconvénients suivants :

- Elles durcissent de manière irréversible. Après avoir durci, il devient impossible d'extraire un élément présentant une anomalie car celui-ci est fermement maintenu en place par la résine. Le retrait de l'élément défaillant nécessite le retrait de la résine. Or l'étape de retrait de la résine est longue, délicate et est donc généralement incompatible avec les contraintes du milieu industriel. Une fois la résine retirée, elle ne peut plus être réutilisée. Le démontage et la réparation de l'élément ne sont donc en général pas effectués. La batterie entière est souvent mise au rebus, ce qui constitue un important gaspillage.
- La résine polyuréthane amortit insuffisamment les vibrations pour des hautes fréquences, par exemple supérieures à 100 Hz ou supérieures à 1000 Hz. On a en effet observé dans des cas où le matériau de calage était une résine polyuréthane que la densité spectrale de puissance (DSP) mesurée sur l'élément pouvait être supérieure à celle appliquée à l'élément. Ce phénomène d'amplification de la densité spectrale de puissance peut conduire à un endommagement des composants de l'élément. La densité spectrale de puissance décrit l'énergie injectée par les vibrations à une fréquence donnée à un éle-ment. Elle est exprimée en $g^2/Hz$.

On cherche donc un matériau permettant de caler les éléments d'une batterie, qui présente de bonnes propriétés d'absorption des vibrations aux hautes fréquences et qui rende possible le retrait d'un ou de plusieurs éléments susceptibles de présenter une anomalie.

Résumé

A cet effet, l'invention propose une batterie comprenant :

a) au moins un élément électrochimique, ledit élément électrochimique comprenant un conteneur,
b) une structure de maintien dudit au moins un élément électrochimique dans la batterie,
c) un gel d'organopolysiloxane disposé entre la structure de maintien et une paroi du conteneur dudit au moins un élément électrochimique

le gel d'organopolysiloxane présentant une pénétrabilité allant de 20 à 500 unités, la pénétrabilité étant mesurée par un test au cône entier, tel que défini dans la norme NF ISO 2137 : 2020-11, pour un gel non travaillé.
Selon un mode de réalisation, la pénétrabilité du gel d'organopolysiloxane va de 100 à 400 unités, de préférence de 200 à 300 unités, de préférence encore de 240 à 280 unités.
Selon un mode de réalisation, l'épaisseur du gel d'organopolysiloxane va de 1 à 10 mm ou de 1 à 5 mm.
Selon un mode de réalisation, la batteric comprenant un premier et un second élément électrochimique, le conteneur de chacun de ces éléments présentant une paroi latérale, le gel d'organopolysiloxane étant disposé entre la paroi latérale du conteneur du premier élément et la paroi latérale du conteneur du second élément sur une hauteur représentant au moins 25 % de la hauteur des conteneurs.
Selon un mode de réalisation, le conteneur dudit au moins un élément présente une extrémité formant un fond et le gel d'organopolysiloxane est disposé entre le fond de l'élément et la structure de maintien.
Selon un mode de réalisation, le conteneur dudit au moins un élément présente une extrémité ouverte permettant l'insertion d'un faisceau électrochimique, cette extrémité étant obturée par un couvercle, le gel d'organopolysiloxane étant disposé entre le couvercle et la structure de maintien.
Selon un mode de réalisation, la structure de maintien dudit au moins un élément électrochimique dans la batterie comprend un ou deux flasques, chaque flasque comprenant au moins un évidement apte à s'emboiter avec le fond du conteneur de l'élément et/ou avec le couvercle de l'élément.
Selon un mode de réalisation, la batterie comprend deux flasques, un premier flasque s'emboitant avec le fond du conteneur dudit au moins un élément et un second flasque s'emboitant avec le couvercle dudit au moins un élément.
Selon un mode de réalisation, la structure de maintien dudit au moins un élément dans la batterie est constituée par une ou plusieurs parois latérales d'un coffre logeant ledit au moins un élément électrochimique.
Selon un mode de réalisation, ledit au moins un élément est de type lithium-ion.

**Brève description des figures**

[Fig. 1a] représente un premier mode de réalisation dans lequel l'extrémité du conteneur de l'élément supportant les bornes de sortie de courant est calée dans une structure de maintien en forme de tube.
[Fig. 1b] représente une variante du premier mode de réalisation dans laquelle le fond du conteneur de l'élément est calé dans la structure de maintien en forme de tube.

[Fig. 2a] représente un second mode de réalisation dans lequel les deux extrémités des éléments sont chacune maintenues par un flasque.

[Fig. 2b] représente un troisième mode de réalisation dans lequel le matériau de calage est disposé d'une part entre les parois latérales d'éléments adjacents et entre la paroi latérale des éléments situés à la périphérie et la paroi interne d'une structure de maintien.

[Fig. 2c] représente un quatrième mode de réalisation dans lequel le matériau de calage est disposé entre les parois latérales de deux éléments adjacents et aux deux extrémités haute et basse des éléments.

[Fig. 2d] représente un cinquième mode de réalisation dans lequel les éléments sont alignés selon une direction définie par leur axe longitudinal. Les éléments sont placés dans un coffre de groupement de forme tubulaire.

[Fig. 3] représente des courbes de densité spectrale de puissance DSP. Aux figures 3a à 3d, l'élément testé est orienté tête en bas. La courbe A représente la DSP injectée. La courbe B représente la DSP rejectée.

La figure 3a représente la densité spectrale de puissance pour des vibrations aléatoires appliquées dans une direction perpendiculaire à l'axe longitudinal de l'élément pour un matériau de calage constitué d'une résine polyuréthane.

La figure 3b représente la densité spectrale de puissance pour des vibrations aléatoires appliquées dans une direction selon l'axe longitudinal de l'élément pour un matériau de calage constitué d'une résine polyuréthane.

La figure 3c représente la densité spectrale de puissance pour des vibrations aléatoires appliquées dans une direction perpendiculaire à l'axe longitudinal de l'élément pour un matériau de calage constitué du gel de silicone 1.

La figure 3d représente la densité spectrale de puissance pour des vibrations aléatoires appliquées dans une direction selon l'axe longitudinal de l'élément pour un matériau de calage constitué du gel de silicone 1.

[Fig. 4] représente des courbes de densité spectrale de puissance. Aux figures 4a à 4d, l'élément est orienté tête en haut. La courbe A représente la DSP injectée. La courbe B représente la DSP rejectée.

La figure 4a représente la densité spectrale de puissance pour des vibrations aléatoires appliquées dans une direction perpendiculaire à l'axe longitudinal de l'élément pour un matériau de calage constitué d'une résine polyuréthane.

La figure 4b représente la densité spectrale de puissance pour des vibrations aléatoires appliquées dans une direction selon l'axe longitudinal de l'élément pour un matériau de calage constitué d'une résine polyuréthane.

La figure 4c représente la densité spectrale de puissance pour des vibrations aléatoires appliquées dans une direction perpendiculaire à l'axe longitudinal de l'élément pour un matériau de calage constitué du gel de silicone 2.

La figure 4d représente la densité spectrale de puissance pour des vibrations aléatoires appliquées dans une direction selon l'axe longitudinal de l'élément pour un matériau de calage constitué du gel de silicone 2.

Description des modes de réalisation de l'invention

L'invention repose sur la découverte qu'un gel de silicone présentant une pénétrabilité allant de 20 à 500 unités, c'est-à-dire de 2 à 50 mm, peut être utilisé comme matériau de calage des éléments d'une batterie, la pénétrabilité étant mesurée par un test au cône entier tel que défini dans la norme NF ISO 2137 : 2020-11, pour un gel non travaillé. Le terme « non travaillé » signifie selon cette norme que la prise d'essai ayant servi pour la mesure de la pénétrabilité a subi le minimum de manipulations lors des opérations de transvasement du récipient porte-échantillon à la coupelle du malaxeur. Le choix de la plage spécifique de pénétrabilité de 20 à 500 unités conduit à un matériau offrant une protection contre les vibrations pour des hautes fréquences, par exemple supérieures à 100 Hz, voire supérieures à 1000 Hz, spécialement pour des vibrations appliquées dans le sens de l'axe longitudinal de l'élément, c'est-à-dire l'axe selon la plus grande dimension de l'élément. De telles valeurs de fréquences sont par exemple observées dans le cas d'un lancement d'un satellite. Au-delà de 500 unités de pénétrabilité, le matériau présente une cohésion insuffisante pour permettre un maintien des éléments. En deçà de 20 unités de pénétrabilité, le matériau présente une absorption insuffisante des vibrations. De préférence, la pénétrabilité du matériau va de 100 à 400 unités, de préférence de 200 à 300 unités, de préférence encore de 240 à 280 unités. Le matériau de calage permet un maintien des éléments en statique. On n'observe pas de fléchissement du matériau sous le poids des éléments.

On entend par silicone un organopolysiloxane. Un organopolysiloxane est un polymère formé d'une chaîne principale inorganique constituée d'une répétition de liaisons siloxanes (...-Si-O-Si-...) sur laquelle des groupes organiques sont liés soit aux atomes de silicium et former ainsi une chaîne latérale, soit aux atomes de silicium situés aux extrémités de la chaîne principale. Le gel de silicone peut être obtenu par réticulation de deux polymères d'organopolysiloxane. Un gel de silicone convenant à l'invention est le gel de silicone BLUESIL ESA 6025 A&B commercialisé par la société Elkem. Fiche de données technique n° 6440-V14 - 2020/01/13.

La consistance du gel de silicone permet le démontage et le retrait des éléments en cas de soupçon d'anomalie de fonctionnement d'un ou de plusieurs éléments. L'effort déployé pour le démontage est bien inférieur à celui qui serait nécessaire si le matériau de calage était une résine polyuréthane rigide ou une résine époxyde. Les éléments défaillants peuvent être démontés, expertisés, réparés et réinstallés dans la batterie. La fluidité du matériau lui permet de combler tout l'espace entre l'élément et la structure de maintien. Le matériau peut être autocicatrisant, c'est-à-dire que des zones d'hétérogénéité à la surface du gel de silicone s'estompent spontanément pour conduire à une surface lisse. La fluidité du gel de silicone contribue au phénomène d'autocicatrisation.

Différents procédés peuvent être employés pour placer le matériau de calage entre la structure de maintien et un élément. La structure de maintien peut se présenter sous la forme d'une coupelle dont la section longitudinale est en forme de U et dont le diamètre interne est légèrement supérieur au diamètre du conteneur de l'élément. On vient déposer le gel de silicone dans le fond de la coupelle, puis on insère l'élément en direction du fond de la coupelle. Sous l'effet de la pression exercée sur le gel par l'enfoncement de l'élément, le gel de silicone s'étale dans le fond de la coupelle, remonte le long des parois verticales de la coupelle et vient combler l'espace entre la paroi verticale de la coupelle et l'élément.

Quand l'espace entre deux éléments adjacents est suffisamment important, il est possible de faire couler le gel de silicone entre les deux éléments. Sous l'effet de la gravité, le gel vient combler l'espace entre les éléments. Enfin, un autre procédé consiste à introduire le gel à l'aide d'une seringue quand l'espace disponible est suffisamment important, par exemple dans l'espace entre deux éléments.

L'épaisseur du matériau une fois en place va en général de 1 à 10 mm, de préférence de 1 à 5 mm.

Différentes structures de maintien des éléments de la batterie vont maintenant être décrites. Ces structures sont décrites dans le cas d'un élément de format cylindrique. Néanmoins, l'invention ne se limite pas au calage d'éléments cylindriques mais s'étend à tout format d'éléments, par exemple prismatique. De préférence, les éléments de la batterie sont de type lithium-ion.

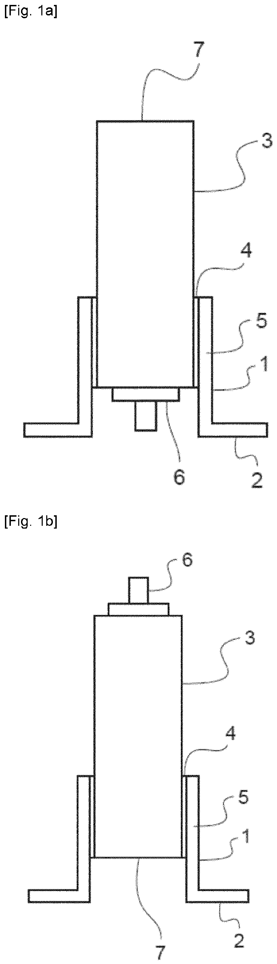

1) Un premier mode de réalisation est décrit en référence aux figures 1a et 1b. La structure de maintien (1) peut présenter la forme d'un tube de section circulaire ou rectangulaire ou carrée. L'une des extrémités présente un retour (2) faisant un angle d'environ 90° par rapport à la direction longitudinale du tube. Le diamètre interne du tube est choisi de manière à être légèrement supérieur à celui de l'élément (3) qu'il doit maintenir. On a recours à un outil qui est plaqué sur l'ouverture du tube et qui sert de fond au tube. On verse du gel de silicone sur l'outil formant fond. On introduit l'élément dans le tube. L'élément peut être introduit en insérant d'abord le couvercle de l'élément supportant les bornes de sortie de courant (6) comme à la figure 1a. L'élément peut aussi être introduit en insérant la partie du conteneur formant fond (7) comme à la figure 1b. Sous l'effet de la pression exercée par le tube, le gel de silicone remonte le long des parois du tube.

2) Dans un second mode de réalisation, la structure de maintien est constituée d'un ou de deux flasques. Un flasque est un gabarit qui aide à maintenir en place la pluralité d'éléments électrochimiques grâce à la présence d'évidements. Ces évidements s'emboitent avec (ou sont adaptés à recevoir) une portion de la surface du conteneur telle que le fond du conteneur ou un couvercle servant à obturer le conteneur. Les évidements sont pratiqués pour épouser soit la forme du couvercle, soit la forme du fond du conteneur. L'insertion par contact des éléments dans les flasques permet d'avoir un contact sur toute la section transversale des éléments, c'est-à-dire soit le fond du conteneur, soit une partie de la surface du couvercle, non occupée par les bornes de sortie de courant. L'espace entre le flasque et la section des éléments est comblé par le gel de silicone. Le gel de silicone peut permettre d'absorber les jeux éventuels existant entre un élément et le flasque. La périphérie des évidements des flasques peut présenter une épaisseur plus importante que le reste du flasque ou un joint à lèvre de manière à s'emboiter sur une portion de la longueur de la surface latérale du conteneur de l'élément ou sur une partie de l'épaisseur du couvercle de l'élément et ainsi garantir un très bon calage de l'élément. Plusieurs variantes sont possibles :

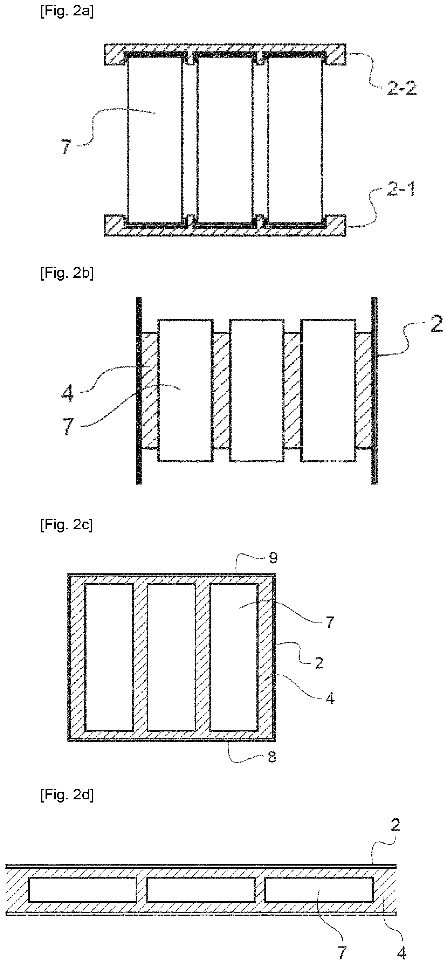

- un seul flasque maintenant en place la pluralité d'éléments par leur couvercle,
- un seul flasque maintenant en place la pluralité d'éléments par le fond de leur conteneur,
- deux flasques se faisant face, l'un maintenant en place la pluralité d'éléments par leur couvercle, l'autre maintenant en place la pluralité d'éléments par le fond de leur conteneur. Une telle variante est représentée sur la figure 2a. Deux flasques 2-1 et 2-2 se font face. Le flasque 2-1 maintient l'une des extrémités des éléments tandis que le second flasque 2-2 maintient l'autre extrémité.

3) Dans un troisième mode de réalisation, les éléments sont maintenus uniquement par leurs parois latérales. Un tel mode de réalisation est illustré à la figure 2b. On utilise une enveloppe rigide (2) constituée de quatre parois verticales. L'enveloppe rigide est dépourvue de parois horizontales inférieure et supérieure. Seules les deux parois perpendiculaires orientées perpendiculairement au plan de la figure sont représentées sur la figure 2b. La hauteur des parois verticales est supérieure à celle des éléments. On place un outil plan (non représenté sur la figure 2b) sous l'enveloppe rigide. Son rôle est d'empêcher au gel de silicone de couler lors de son application. Il sera retiré après avoir introduit le gel de silicone. On place la pluralité d'éléments (7) dans l'enveloppe rigide (2). Le placement ou le centrage des éléments peut être facilité grâce à un gabarit. On verse le gel de silicone (4) dans les espaces inter-éléments et dans les espaces entre les éléments et les parois verticales de l'enveloppe rigide. Cette variante permet un bon calage des éléments dans un plan perpendiculaire à l'axe longitudinal des éléments car le gel de silicone absorbe les mouvements des éléments dans ce plan. La hauteur sur laquelle le gel de silicone s'étend peut être ajustée de manière à couvrir quasiment toute la hauteur du conteneur des éléments. Le gel de silicone peut s'étendre sur une hauteur représentant au moins 25 % ou au moins 50% ou au moins 75% ou au moins 90% de la hauteur des conteneurs. Ce mode de réalisation présente également l'avantage de permettre un accès au couvercle et au fond du conteneur des éléments. L'accès au couvercle permet de réaliser les connexions de puissance à l'aide de barrettes métalliques de forte section.

4) Dans un quatrième mode de réalisation illustré à la figure 2c, on utilise une enveloppe rigide constituée de quatre parois verticales, d'une paroi horizontale inférieure (8) et d'un couvercle amovible (9). On dépose une couche de silicone sur la face interne de la paroi horizontale inférieure. On place la pluralité d'éléments sur la couche de silicone. Le placement ou le centrage des éléments peut être facilité grâce à un gabarit. On verse le gel de silicone dans les espaces inter-éléments et dans les espaces entre les éléments et les parois verticales de l'enveloppe rigide. On recouvre la partie supérieure de gel de silicone en laissant libre l'accès aux bornes de sortie de courant des éléments. On ferme l'enveloppe par le couvercle. Cette variante permet à la fois un bon calage des éléments dans un plan perpendiculaire à l'axe longitudinal des éléments et dans une direction selon l'axe longitudinal des éléments. On peut retirer la paroi horizontale inférieure et/ou le couvercle amovible. La batterie alors est un bloc de gel de silicone dans lequel sont noyés les éléments.

5) Dans un cinquième mode de réalisation illustré à la figure 2d, les éléments (7) sont alignés dans une direction suivant leur axe longitudinal. La structure de maintien (2) présente la forme d'un tube de section circulaire, rectangle ou carrée. Le gel de silicone (4) est placé dans l'espace inter-éléments et dans l'espace entre les éléments et la paroi interne du tube.

Ces cinq modes de réalisation ont été illustrés aux figures 1a, 1b, 2a à 2d avec trois éléments. Il est entendu que l'invention peut être mise en œuvre avec un nombre supérieur ou inférieur d'éléments.

Outre les propriétés d'amortissement des vibrations à haute fréquence, spécialement dans la direction de l'axe longitudinal de l'élément, le gel de silicone présente les avantages suivants :

- il est isolant électrique. Sa constante diélectrique est d'environ 3 à 1 kHz selon la norme IEC 60250 ;
- il présente une tension de claquage élevée d'environ 20 kV/mm selon la norme IEC 60243 ;
- il ne se rétracte pas. Il s'expanse peu dans une gamme de températures proches de l'ambiante;
- il peut être utilisé en couche très fine, d'épaisseur inférieure à 2 mm, et également en couche épaisse ;
- il peut permettre un démontage des éléments. Les éléments peuvent être réutilisés hors de la batterie ;
- il n'endommage pas les traitements de surface, ni les peintures ;
- il ne présente pas de risque pour la santé, contrairement aux résines polyuréthanes qui ont des effets cancérogènes, mutagènes ou sont toxiques pour la reproduction (CMR).

Le matériau de calage peut être utilisé pour caler les éléments d'une batterie destinée à être utilisée dans un moyen de transport terrestre, un moyen de transport routier, un moyen de transport ferroviaire, un moyen de transport maritime ou fluvial, un aéronef, un chariot de manutention.

Il peut être utilisé dans une batterie destinée à alimenter certains dispositifs tels qu'un satellite à basse orbite terrestre (LEO) et un satellite géostationnaire (GEO). Il peut être utilisé dans des applications pétrolières (alimentation de capteurs placés dans une tête de forage).

EXEMPLES

Un élément lithium-ion de format cylindrique a été calé par du gel de silicone dans une structure de maintien selon le premier mode de réalisation illustré aux figures 1a et 1b. L'élément a été orienté soit tête en bas, c'est-à-dire avec les bornes de sortie de courant orientées vers le bas (Figure 1a), soit tête en haut, c'est-à-dire avec les bornes de sortie de courant orientées vers le haut (Figure 1b). Deux gels de silicone Gel 1 et Gel 2 ont été testés. Gel 1 présente une pénétrabilité de 260 unités. Gel 2 présente une pénétrabilité inférieure à 200 unités. Une résine polyuréthane constitue le matériau de calage de référence. L'élément calé par la structure de maintien est placé sur un pot de vibration. Le pot peut générer des vibrations dans une direction perpendiculaire à l'axe longitudinal de l'élément ou dans la direction de l'axe longitudinal de l'élément. Un accéléromètre est placé toujours en haut de l'élément, sur sa circonférence, localisation la plus contraignante puisque l'élément est maintenu uniquement par la base du côté opposé. Les niveaux de vibration, exprimés en $g^2/Hz$, décrivent l'énergie injectée par les vibrations à une fréquence donnée. Le niveau de vibration mesuré sur l'élément, encore appelé DSP rejectée, est comparé au niveau de vibration appliqué à l'élément par le pot de vibration, encore appelé DSP injectée.

A) Recherche de fréquences de résonance

L'objectif a été de déterminer avec un balayage sinus, les fréquences auxquelles on repère une augmentation du signal rejecté par rapport au signal injecté. Cette augmentation correspondant à une amplification du signal. Les fréquences, auxquelles une amplification du signal apparaît, sont appelées fréquences de résonance F. L'amplification Q est définie comme la racine carrée du rapport entre la densité spectrale de puissance réjectée et la densité spectrale de puissance injectée à la fréquence de résonance.

Critères de succès :

- La première fréquence à laquelle est mesurée une amplification doit être supérieure à 140 Hz.
- L'amplification à la fréquence de résonance doit être inférieure voire comparable à une résine polyuréthane avec confirmation de la non-dégradation des éléments.

Profil :

La recherche de fréquence se fait par un balayage sinus à 2 octaves par minute selon le tableau 1:

Tableau 1

| Direction d'application de la vibration | Fréquence (Hz) | Niveau d'accélération (g) |
|---|---|---|
| Selon l'axe longitudinal de l'élément | 10-2000 | 0,5 |
| Perpendiculairement à l'axe longitudinal de l'élément | | |

Les résultats sont donnés dans le tableau 2 ci-dessous, avec en comparaison les résultats obtenus sur la résine polyuréthane.

Tableau 2

| | Elément tête en bas | | Elément tête en haut | | Critère sur la fréquence >140 Hz |
|---|---|---|---|---|---|
| | Résine polyuréthane | Gel de silicone 1 | Résine polyuréthane | Gel de silicone 2 | |
| 1ère fréquence de résonance détectée (Hz) pour une vibration perpendiculairement à l'axe longitudinal de l'élément | 275 | 181 | 369 | 232 | oui |
| 1ère fréquence de résonance détectée (Hz) pour une vibration selon l'axe longitudinal de l'élément | 1841 | 713 | 369 | 1041 | oui |

On constate que le gel 1 et le gel 2 satisfont le critère d'une fréquence de résonance supérieure à 140 Hz.

Les tests de vibrations sinus réalisés avec le gel 1 et le gel 2 conduisent à des résultats équivalents à ceux obtenus avec la résine polyuréthane.

B) Vibrations aléatoires :

Les niveaux de vibrations appliqués à l'élément, en fonction de la fréquence sont donnés dans le Tableau 3.

Tableau 3

| | Fréquence (Hz) | Niveau de DSP |
|---|---|---|
| Vibration dans une direction perpendiculaire à l'axe longitudinal de l'élément. | 20-80 | +3 db/octave |
| | 80-100 | 0,093 $g^2$/Hz |
| | 100-1000 | 0,1 $g^2$/Hz |

(suite)

| | | Fréquence (Hz) | Niveau de DSP |
|---|---|---|---|
| Vibration dans une direction selon l'axe longitudinal de l'élément. | | 1000-2000 | -3 dB/octave |
| | | 20-100 | +3 dB/octave |
| | | 100-400 | 0,3 $g^2$/Hz |
| | | 400-2000 | -3 dB/octave |

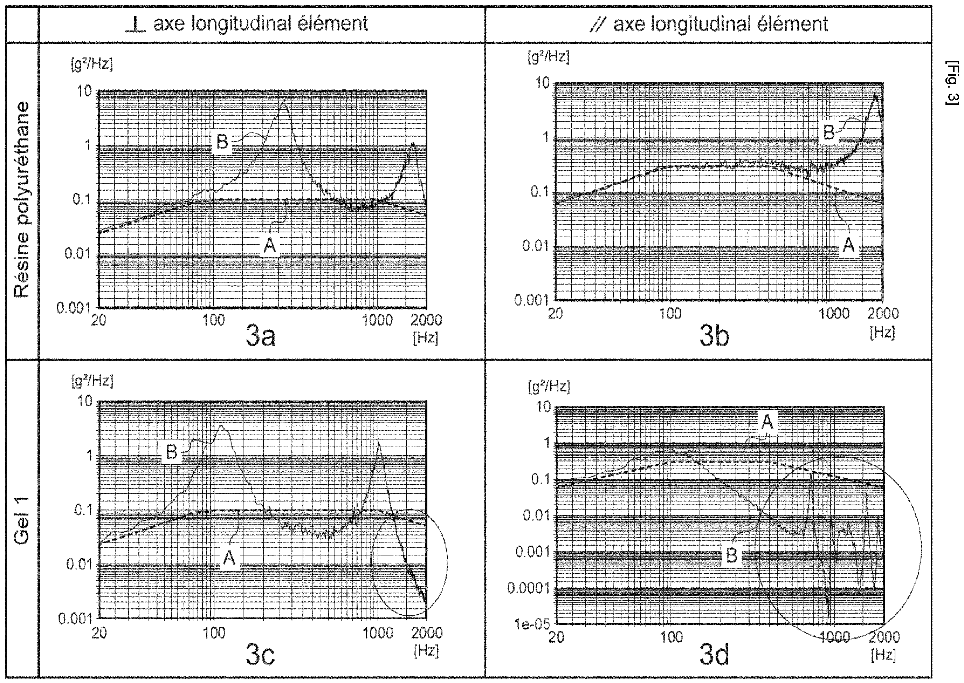

Les niveaux de vibration appliqués sont représentés sur une courbe DSP en fonction de la fréquence de la vibration (Hz). Les courbes DSP ont été tracées pour un élément orienté tête en bas, pour un matériau de calage constitué soit de la résine polyuréthane, soit du gel de silicone 1. Dans le cas de la résine polyuréthane, on note une amplification de la DSP sur quasiment toute la plage de fréquences balayée, que ce soit dans la direction de l'axe longitudinal ou dans une direction perpendiculaire à l'axe longitudinal de l'élément. En effet, la DSP rejectée (B) est au-dessus de la DSP (A) sur quasiment toute la gamme de fréquences balayées (Figures 3a et 3b). Dans le cas du gel de silicone 1, on note une réduction de la DSP rejectée, pour des fréquences allant de 200 à 800 HZ ou supérieures à 1050 Hz, pour une vibration appliquée dans la direction perpendiculaire à l'axe longitudinal de l'élément (Figure 3c). On note de plus une réduction de la DSP rejectée pour une fréquence supérieure à 150 Hz, pour une vibration appliquée dans la direction de l'axe longitudinal de l'élément (Figure 3d).

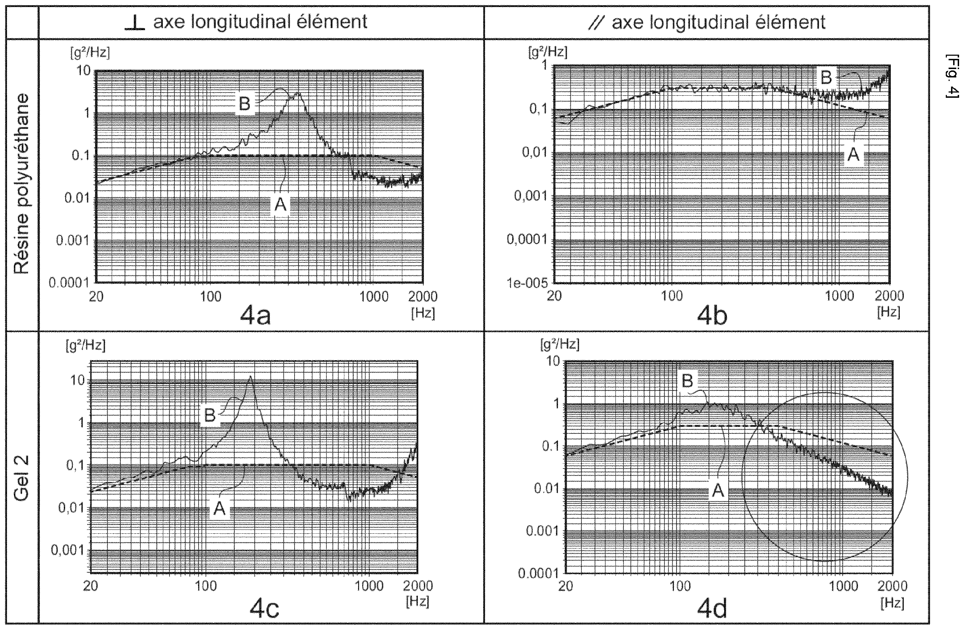

Les courbes DSP ont été tracées pour un élément orienté tête en haut, pour un matériau de calage constitué soit de la résine polyuréthane, soit du gel de silicone 2. Dans le cas de la résine polyuréthane, on note une amplification de la DSP de 70 à 700 Hz, dans la direction perpendiculaire à l'axe longitudinal de l'élément et à partir de 400 Hz dans la direction de l'axe longitudinal de l'élément (Figures 4a et 4b). Dans le cas du gel de silicone 2, on note une réduction de la DSP, pour des fréquences allant de 350 à 1050 Hz, dans la direction perpendiculaire à l'axe longitudinal de l'élément (Figure 4c). On note également une réduction de la DSP pour une fréquence supérieure à 350 Hz, dans la direction de l'axe longitudinal de l'élément (Figure 4d). L'utilisation d'un gel de silicone permet donc une réduction de la DSP pour certaines plages de fréquence lorsque les vibrations sont appliquées dans l'axe longitudinal de l'élément. Cette propriété d'amortir la vibration dans l'axe longitudinal de l'élément est remarquable car dans le montage expérimental des figures 1a et 1b utilisé pour ces essais, on note que le gel de silicone est positionné uniquement autour de la paroi latérale des éléments en non sur le couvercle ou le fond de l'élément. On s'attendrait donc à réduction de la DSP dans une plus grande mesure pour dans vibrations appliquées perpendiculairement à l'axe longitudinal de l'élément que dans la direction de l'axe longitudinal de l'élément. On note également sur la Figure 4d que le gel 2 qui présente une pénétrabilité inférieure à 200 unités réduit la DSP dans la direction longitudinale de l'élément de manière linéaire à partir de 350 Hz. Le gel 1 qui présente une pénétrabilité de 260 unités réduit certes la DSP dans la direction longitudinale de l'élément à partir de 350 Hz, mais de manière plus aléatoire, comme le montre la Figure 3d.

C) Calcul du paramètre $G_{RMS}$ à partir des courbes DSP :

Le paramètre $G_{RMS}$ correspond à l'accélération globale moyennée (racine de l'intégrale de la DSP par la fréquence qui est l'aire sous la courbe DSP) sur la plage complète des fréquences balayées, c'est-à-dire allant de 20 à 2000 Hz. L'exploitation des courbes DSP des figures 3a à 3d et 4a à 4d permet de calculer la valeur du paramètre $G_{RMS}$. Une comparaison peut être faite entre la valeur du paramètre $G_{RMS}$ obtenue avec les gels de silicone et celle obtenue avec la résine polyuréthane. Les résultats sont rassemblés dans le Tableau 4

Tableau 4

| Vibrations aléatoires | | | | | |
|---|---|---|---|---|---|
| | Tête en bas | | Tête en haut | | |
| | $G_{RMS}$ rejecté (g) Résine polyuréthane | $G_{RMS}$ rejecté (g) Gel de silicone 1 | $G_{RMS}$ rejecté (g) Résine polyuréthane | $G_{RMS}$ rejecté (g) Gel de silicone 2 | $G_{RMS}$ injecté (g) |
| Direction perpendiculaire à l'axe longitudinal de l'élément | 29,5 | 20,6 | 20,8 | 22,6 | 12,8 |

(suite)

| Vibrations aléatoires | | | | | |
|---|---|---|---|---|---|
| | Tête en bas | | Tête en haut | | |
| | $G_{RMS}$ rejecté (g) Résine polyuréthane | $G_{RMS}$ rejecté (g) Gel de silicone 1 | $G_{RMS}$ rejecté (g) Résine polyuréthane | $G_{RMS}$ rejecté (g) Gel de silicone 2 | $G_{RMS}$ injecté (g) |
| Direction selon l'axe longitudinal de l'élément | 46,9 | 8,5 | 24,2 | 15,6 | 17,3 |

Dans le cas du gel de silicone 1 « tête en bas », la valeur de $G_{RMS}$ est inférieure de 30% à celle de la résine polyuréthane dans la direction perpendiculaire à l'axe longitudinal de l'élément (20,6 vs. 29,5). La valeur du $G_{RMS}$ est inférieure de 82% à celle de la résine polyuréthane dans la direction de l'axe longitudinal de l'élément (8,5 vs. 46,9). Dans la direction de l'axe longitudinal de l'élément, la valeur de $G_{RMS}$ réjecté est même inférieure à celle de $G_{RMS}$ injecté (8,5 vs. 17,3).

Dans le cas du gel de silicone 2 « tête en haut », la valeur de $G_{RMS}$ est équivalente à celle de la résine polyuréthane dans la direction perpendiculaire à l'axe longitudinal de l'élément. La valeur du $G_{RMS}$ est inférieure de 36 % à celle de la résine polyuréthane dans la direction de l'axe longitudinal de l'élément (15,6 vs. 24,2). Dans la direction de l'axe longitudinal de l'élément, la valeur de $G_{RMS}$ réjecté est même inférieure à celle de $G_{RMS}$ injecté (15,5 vs. 17,3). Les gels 1 et 2 réduisent donc la DSP dans la direction de l'axe longitudinal de l'élément.

D) Accélération y via la formule de Miles :

L'accélération gamma à la fréquence de résonance est définie selon la formule de Miles suivante :

[Math 1]

$$\gamma = \sqrt{(\pi/2) \times P \times F \times Q}$$

où :

F est la fréquence de résonance mesurée lors des vibrations aléatoires ;
P est la densité spectrale de puissance exprimée en $g^2$/Hz à la fréquence de résonance ;
Q est l'amplification à la fréquence de résonance F et se définit comme la racine carrée du ratio entre la DSP rejectée (Pmax en $g^2$/Hz) et la DSP injectée.

[Math 2]

$$Q = \sqrt{\frac{P_{rejecté}}{P_{injecté}}}$$

Les tableaux 5 et 6 indiquent les valeurs du paramètre $\gamma$ de la formule de Miles pour les orientations tête en haut et tête en bas de l'élément.

Tableau 5

| | Direction perpendiculaire à l'axe longitudinal de l'élément | | | | | | | |
|---|---|---|---|---|---|---|---|---|
| | Tête en bas | | | | Tête en haut | | | |
| | Résine polyuréthane | | Gel de silicone 1 | | Résine polyuréthane | | Gel de silicone 2 | |
| | Injecté | Rejecté | Injecté | Rejecté | Injecté | Rejecté | Injecté | Rejecté |
| F(Hz) | 272 | 272 | 112 | 112 | 270 | 270 | 180 | 180 |

(suite)

| | Direction perpendiculaire à l'axe longitudinal de l'élément | | | | | | | |
|---|---|---|---|---|---|---|---|---|
| | Tête en bas | | | | Tête en haut | | | |
| | Résine polyuréthane | | Gel de silicone 1 | | Résine polyuréthane | | Gel de silicone 2 | |
| | Injecté | Rejecté | Injecté | Rejecté | Injecté | Rejecté | Injecté | Rejecté |
| P (g²/Hz) | 0,11 | 7,01 | 0,081 | 3,671 | 0,1 | 6,5 | 0,1 | 12 |
| γ (g) | **19,4** | | **9,8** | | **18,5** | | **17,6** | |
| Q | 8,0 | | 6,7 | | 8,1 | | 11,0 | |

Tableau 6

| | Direction selon l'axe longitudinal de l'élément | | | | | | | |
|---|---|---|---|---|---|---|---|---|
| | Tête en bas | | | | Tête en haut | | | |
| | Résine polyuréthane | | Gel de silicone 1 | | Résine polyuréthane | | Gel de silicone 2 | |
| | Injecté | Rejecté | Injecté | Rejecté | Injecté | Rejecté | Injecté | Rejecté |
| F(Hz) | 1780 | 1780 | 100 | 100 | 1790 | 1790 | 150 | 150 |
| P (g²/Hz) | 0,08 | 6,75 | 0,359 | 0,715 | 0,65 | 1,7 | 0,3 | 1 |
| γ (g) | **45,3** | | **8,9** | | **54,4** | | **11,4** | |
| Q | 9,2 | | 1,4 | | 1,6 | | 1,8 | |

Les tableaux 5 et 6 montrent que les accélérations γ à la fréquence de résonance pour les gels 1 et 2 sont inférieures à celles de la résine de polyuréthane.

**Revendications**

1. Batterie comprenant :

   a) au moins un élément électrochimique, ledit élément électrochimique comprenant un conteneur,
   b) une structure de maintien dudit au moins un élément électrochimique dans la batterie,
   c) un gel d'organopolysiloxane disposé entre la structure de maintien et une paroi du conteneur dudit au moins un élément électrochimique le gel d'organopolysiloxane présentant une pénétrabilité allant de 20 à 500 unités, la pénétrabilité étant mesurée par un test au cône entier, tel que défini dans la norme NF ISO 2137 : 2020-11, pour un gel non travaillé.

2. Batterie selon la revendication 1, dans laquelle la pénétrabilité du gel d'organopolysiloxane va de 100 à 400 unités, de préférence de 200 à 300 unités, de préférence encore de 240 à 280 unités.

3. Batterie selon l'une des revendications précédentes, dans laquelle l'épaisseur du gel d'organopolysiloxane va de 1 à 10 mm ou de 1 à 5 mm.

4. Batterie selon l'une des revendications précédentes, comprenant un premier et un second élément électrochimique, le conteneur de chacun de ces éléments présentant une paroi latérale, le gel d'organopolysiloxane étant disposé entre la paroi latérale du conteneur du premier élément et la paroi latérale du conteneur du second élément sur une hauteur représentant au moins 25 % de la hauteur des conteneurs.

5. Batterie selon l'une des revendications 1 à 3, dans laquelle le conteneur dudit au moins un élément présente une extrémité formant un fond et le gel d'organopolysiloxane est disposé entre le fond de l'élément et la structure de maintien.

**6.** Batterie selon l'une des revendications précédentes, dans laquelle le conteneur dudit au moins un élément présente une extrémité ouverte permettant l'insertion d'un faisceau électrochimique, cette extrémité étant obturée par un couvercle, le gel d'organopolysiloxane étant disposé entre le couvercle et la structure de maintien.

**7.** Batterie selon l'une des revendications 5 à 6, dans laquelle la structure de maintien dudit au moins un élément électrochimique dans la batterie comprend un ou deux flasques, chaque flasque comprenant au moins un évidement apte à s'emboiter avec le fond du conteneur de l'élément et/ou avec le couvercle de l'élément.

**8.** Batterie selon la revendication 7, comprenant deux flasques, un premier flasque s'emboitant avec le fond du conteneur dudit au moins un élément et un second flasque s'emboitant avec le couvercle dudit au moins un élément.

**9.** Batterie selon l'une des revendications précédentes, dans laquelle la structure de maintien dudit au moins un élément dans la batterie est constituée par une ou plusieurs parois latérales d'un coffre logeant ledit au moins un élément électrochimique.

**10.** Batterie selon l'une des revendications précédentes, dans laquelle ledit au moins un élément est de type lithium-ion.

[Fig. 1a]

[Fig. 1b]

[Fig. 2a]

[Fig. 2b]

[Fig. 2c]

[Fig. 2d]

[Fig. 3]

[Fig. 4]

Europäisches
Patentamt

European
Patent Office

Office européen
des brevets

## RAPPORT DE RECHERCHE EUROPEENNE

Numéro de la demande

**EP 22 16 3573**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | CN 108 023 039 A (HUIZHOU MODERN BATTERY LTD) 11 mai 2018 (2018-05-11) * abrégé * ----- | 1-10 | INV. H01M50/242 |
| A | KR 2019 0091631 A (TIUM RES CO LTD [KR]) 7 août 2019 (2019-08-07) * revendications 1, 2 * ----- | 1-10 | |

**DOMAINES TECHNIQUES RECHERCHES (IPC)**

**H01M**

Le présent rapport a été établi pour toutes les revendications

| Lieu de la recherche | Date d'achèvement de la recherche | Examinateur |
|---|---|---|
| Munich | 31 août 2022 | Koessler, Jean-Luc |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 22 16 3573

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-08-2022

| Document brevet cité au rapport de recherche | Date de publication | Membre(s) de la famille de brevet(s) | Date de publication |
|---|---|---|---|
| CN 108023039 A | 11-05-2018 | AUCUN | |
| KR 20190091631 A | 07-08-2019 | AUCUN | |

EPO FORM P0460

Pour tout renseignement concernant cette annexe : voir Journal Officiel de l'Office européen des brevets, No.12/82

**EP 4 071 908 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2403050 A